# EUROPEAN PATENT APPLICATION

(11) **EP 1 734 358 A1**
(43) Date of publication of application: **20.12.2006**
(21) Application number: 05727784.0
(22) Date of filing: 30.03.2005
(51) Int. Cl.: G01N 21/64

(54) **MASKING MEMBER, LIGHT MEASURING METHOD, LIGHT MEASURING KIT AND LIGHT MEASURING CONTAINER**

(30) Priority: 30.03.2004 JP 2004100964
(71) Applicant: HAMAMATSU PHOTONICS K.K., Hamamatsu-shi, Shizuoka-ken 435-8558 (JP)
(72) Inventor: KATAOKA, Takuji, c/o Hamamatsu Photonics K.K., Hamamatsu-shi, Shizuoka 4358558 (JP)
(74) Representative: Frost, Alex John
(86) International application number: PCT/JP2005/006110
(87) International publication number: WO 2005/095929

(57) **Abstract**

The present invention relates to a masking member or the like by which effects of fluorescence originated from fluorescent dye or test compound in a buffer accommodated in a container together with a measurement object are removed surely and which eliminates removal of excessive fluorescent dye or test compound included in the buffer. The masking member is a member used for measuring fluorescence of a measurement object placed in the buffer in the container through the bottom of the container, and comprises a light shielding part and an outer frame part. The light shielding part has liquid permeability and shields a background light traveling form the buffer, located on the opposite side of the bottom across the measurement object, toward the bottom of the container. The outer frame part performs positioning of the light shielding part on the opposite side of the bottom of the container across the measurement object, while supporting the light shielding part. In this configuration, effects of a background light originated from excessive fluorescent dye or the like in the buffer are removed surely, and a process for replacing the buffer becomes unnecessary. Besides, the masking member may be applicable to light emission measurements.

## Description

### Technical Field

The present invention relates to a masking member, a light measuring method, a light measuring kit and a light measuring container.

### Background Art

Conventionally, measurements of fluorescence and light emission have been used for various purposes including screening or the like of the chemical library in drug discovery. For such a measurement, firstly, a measurement object such as incubated cell or the like is disposed on the bottom of a transparent container such as petri dish or Bayer bottle or the like. In a case of fluorescence measurement as an example, a buffer (buffer solution, external solution) including a dye is filled additionally. If nothing is done, fluorescence of fluorescent dye not absorbed by cells or the like acts as a background light, and it becomes difficult to identify and measure fluorescence from a measurement object, and therefore, washing (buffer replacement, washout) is attempted repeatedly by sucking and removing a buffer containing such excess fluorescent dye and by adding another buffer free from fluorescent dye. Following this, a test compound to be subjected to screening is supplied and a screening takes place while irradiation of exciting light is made from the bottom composed of a transparent member of the container to a measurement object and measurement of fluorescence originated from the measurement object is carried out.

Note that, in the above-mentioned fluorescence measurement, there exist test compounds to be subjected to screening that emit fluorescence by themselves (self-fluorescent compound). Some predict that self-fluorescent compounds may reach as much as 70 to 80% of these compounds. Here, when a test is carried out by supplying self-fluorescent compound for the measurement object, it is difficult to determine whether fluorescence level measured is attributable to a measurement object incorporating fluorescent dye of cells or the like or to self-fluorescent compounds in the buffer (artifact). As a result, there arises a problem that pseudopositive grows significantly. In this case, after a test compound having self-fluorescence is supplied for the measurement object, an additional step of washing with buffer free from such compound is necessary, while such washing is time-consuming, and especially in the high-throughput screening of compounds, the washing causes reduction in detection accuracy and also in throughput. Further, addition of washing step may not only hinder real-time measurement of effects of a test compound on the measurement object, but also invite detachment of the measurement object from the bottom of the container.

In order to overcome the drawbacks relating to background fluorescence (nonspecific fluorescence) due to excessive fluorescent materials in the buffer, for example, as a first fluorescence measurement method, such a method has been used practically that black pigment or dyes of various types are mixed into the buffer to reduce effects resulting from excessive fluorescent dyes without involving washing step (see, for example, Fig. 2 of Patent Document 1). As a second fluorescence measurement method, such a method has been proposed that buffers to which are added polymer latex beads, inorganic particles or the like are laminated on a measurement object to form an optical separation layer between the measurement object and the buffer, and background fluorescence resulting from the buffer above this separation layer is shielded (see, for example, Fig. 6 of Patent Document 1).
Patent Document 1: Japanese Patent No. 3452068

### Disclosure of the Invention

### Problems to be Solved by the Invention

The present inventors made an intensive study of the conventional light measuring method for measuring fluorescence or light emission and found the following problems. Namely, in the first fluorescence measuring method by which black pigment or the like are mixed into the buffer, black pigment or the like themselves influence functions of cells, which are the measurement object, and in some cases, various reactions are hindered and therefore the first method is not able to cope with entire measurement system. Further in some cases, effects of a test compound on the measurement object can not be measured accurately due to adsorption of the test compound to pigments. Moreover, in a case of optical quenching in which pigment is involved, absorption band is different depending on wavelength, and therefore, optimum pigment should be selected depending on types of fluorescent dye and measuring system.

On the other hand, in the second fluorescence measuring method, in which a buffer to which are added polymer latex beads or the like is laminated on the measurement object to form an optical separation layer between the measurement object and the buffer, particles of polymer latex beads or the like make direct contact with cells, which are the measurement object, and it is probable that cells are badly affected (effects due to physical contact). Moreover, reagent or a test compound which needs to be subjected to screening is further dispensed, after a separation layer is formed by polymer latex beads or the like, craters will be caused to the separation layer due to delivery pressure of a pipette or the like, and thickness of the separation layer becomes uneven. When this is the case, thinner portion and thicker portion are caused to the separation layer and as a result, there is a possibility that high-resolution detection of fluorescence attributable to cells or the like becomes impossible.

The present invention has been developed to overcome above-mentioned problems and the object of the present invention is to provide masking member for light measurement, light measuring method, light measuring kit and light measuring container by which effects attributable to fluorescence or light emission resulting from fluorescent dye in the buffer and the test compound are removed surely without giving any bad influence on the measurement of fluorescence or light emission resulting from the measurement object, and by which a need for washing of fluorescent dye in the buffer and test compound or the like is eliminated.

### Means for Solving the Problems

The masking member according to the present invention is a measuring member used for measuring fluorescence or light emission, originated from a measurement object placed in the liquid in the container, through the bottom of the container, and comprises a light shielding part and an outer frame part. The light shielding part has liquid permeability and also has light shielding effect to shield a background light traveling from the liquid, located on the opposite side of the container bottom across the measurement object, toward the bottom of the container. The outer frame part positions the light shielding part, while supporting the same, on the opposite side of the container bottom across the measurement object.

In accordance with the above-mentioned composition, in the case of fluorescence measurement, the masking member shields an exciting light irradiated through the container bottom, with respect to liquid containing fluorescent dye and test compound or the like located at higher portion than the measurement object in the liquids accommodated in the container, and therefore, materials above the measurement object are not excited. Thus, generation of background light is suppressed, thereby improving accuracy of detection of fluorescence specific to the measurement object. Even when excessive fluorescent dye or test compound located at higher portion than the measurement object is excited by a part of the exciting light passing through the masking member, background light from the liquid containing them to the container bottom can be shielded, and thereby separation of fluorescence originated from the measurement object from background light is possible. Further, at light emission measurement, the masking member shields background light from the liquid containing light emission reagent or the like located at higher portion than the measurement object to the container bottom, and thereby separation of light emission originated from the measurement object from background light becomes possible. In the meantime, the masking member can allow transmission of liquids and allow fluorescent dye in the liquid, test compound and light emitting reagent or the like to react with the measurement object. In other words, the light shielding part having liquid permeability is disposed at higher portion than the measurement object due to the function of the outer frame part while being immersed in the liquid in the container.

In this configuration, the masking member can shield surely fluorescence of fluorescent dye and the test compound other than the measurement object while the masking member itself does not contact with the measurement object such as cells or the like, and therefore, high-sensitivity fluorescence measurement becomes possible excluding effects of fluorescence originated from fluorescent dye in the buffer and self-fluorescence of the test compound without giving any bad influence to the measurement object such as cells. In this case, it is possible to cope with any measurement regardless of types of the fluorescent dyes (fluorescence wavelength) and measuring system. In a case that reagent is dispensed after the light shielding part in the masking member is inserted in the container, since the light shielding part itself has liquid permeability, the reagent is transmitted through the light shielding part and reaches the measurement object. Therefore, light shielding effect of the light shielding member itself is maintained uniform, which enables high-resolution detection of fluorescence originated from the measurement object. Further, in light emission measurement, same as the fluorescence measurement, since the masking member itself does not make contact with the measurement object and light emission originated from surplus light emission regent or the like, which is not concerned with the measurement object, can be surely shielded, high-sensitivity light emission measurement excluding effects of light emission from light emission reagent in the buffer becomes possible without giving bad influences to the measurement object. In this case, it is possible to cope with any measurement regardless of types of the light emission reagents and measuring system.

Further, since it is possible to shield fluorescence or light emission from excessive fluorescent dye, test compound or light emission reagent in the liquid by merely inserting a light shielding part of the masking member in the container where the measurement object is disposed, before or after the liquid containing fluorescent dye, test compound, light emission reagent or the like is added, there is no need for washing of the fluorescent dye, test compound or light emission reagent contained in the liquid, thereby enabling to improve throughput in the fluorescence or light emission measurement.

The masking member according to the present invention can be applied to a microplate that has a plurality of wells, each of which accommodates a liquid containing the measurement object. In this case, the masking member comprises a plurality of light shielding parts prepared corresponding to each of the wells and a supporting structure for supporting these light shielding parts in a predetermined position in each of corresponding wells. Each of light shielding parts has liquid permeability and also has light shielding effect for shielding a background light from the liquid, located on the opposite side of the corresponding well bottom across the measurement object accommodated in the corresponding well, to the bottom of the well. The supporting structure comprises a sheet-shaped part covering an upper plane of the microplate and a plurality of outer frame parts each prepared corresponding to one of the wells. Note that each of outer frame parts in the supporting structure positions the light shielding part in the state supporting the same on the opposite side of the corresponding well bottom across the measurement object accommodated in the corresponding well.

In above-mentioned composition, even a case where the objects to be measured are put into a plurality of wells on the microplate and a number of fluorescence or light emission measurements are carried out at one time, light shielding of each of wells can be performed collectively, thereby enabling to further improve throughput of fluorescence or light emission measurements.

The light measuring method according to the present invention comprises: a first step of inserting a measurement object in a container; a second step of adding a liquid containing fluorescent dye, test compound or light emission reagent to the container; a third step of shielding a background light from the liquid, located on the opposite side of the container bottom across the measurement object, toward the bottom of the container by disposing a masking member having above-mentioned structure oppositely to the container; and a fourth step of measuring from the bottom of the container fluorescence or light emission originated from the measurement object. In this case, the third step prepares a masking member that comprises a light shielding part having light shielding effect and liquid permeability, and disposes the masking member so as to sandwich the measurement object between the light shielding part and the bottom of the container. On the other hand, the light measuring method according to the present invention may comprise; a first step of inserting a measurement object in a container; a second step of disposing the masking member having above-mentioned structure with regard to the container; a third step of adding a liquid containing fluorescent dye, test compound or light emission reagent in the container; and a fourth step of measuring from the bottom of the container fluorescence or light emission originated from the measurement object. In this case, in the second step, when the masking member is disposed with regard to the container, a light shielding part is positioned in a predetermined place in the container. Further, measurement of fluorescence or light emission in the fourth step is carried out while a background light from the liquid, located on the opposite side of the container bottom across the measurement object, toward the bottom of the container is being shielded by the masking member.

In above-mentioned composition, for fluorescence measurement, the masking member shields an exciting light irradiated via the container bottom, for liquid containing fluorescent dye and test compound or the like located in the higher portion than the measurement object out of the whole liquid accommodated in the container, and therefore materials above the measurement object are not excited. Thus, generation of background light can be suppressed, thereby improving accuracy of detection of fluorescence specific to the measurement object. Even when a part of exciting light is passed through the masking member and excessive fluorescent dye or test compound located higher than the measurement object is excited, a background light from the liquid located higher than the measurement object toward the bottom of the container is shielded by the masking member, and separation between fluorescence originated from the measurement object and the background light becomes possible. Further, for light emission measurement, the masking member shields a background light from the liquid containing light emission reagent or the like located higher than the measurement object to the bottom of the container, separation between fluorescence originated from the measurement object and the background light becomes possible. Besides, since constituents of fluorescent dye or the like in the liquid can transmit the light shielding part in the masking member, reaction with the measurement object is possible.

In this composition, high-sensitivity fluorescence measurements becomes possible excluding effects of fluorescence originated from fluorescent dye and self-fluorescence of the test compound in the liquid in the container. Further, for light emission measurement, same as the fluorescence measurement, high-sensitivity light emission measurement excluding effects of light emission from light emission reagent or the like in the liquid becomes possible. Further, it is possible to cope with various measurements regardless of types of fluorescent dye, test compounds or light emission reagents. Furthermore, even when reagent is dispensed after the masking member is disposed, uniformity of light shielding is maintained. In addition, since it is possible to shield fluorescence originated from excessive fluorescent dye in the liquid, self-fluorescence of test compound or light emission originated from light emission reagent, by merely inserting a light shielding part of the masking member in the container before or after fluorescent dye, test compound or light emission reagent are added, there is no need for washing of the fluorescent dye, test compound or light emission reagent contained in the liquid accommodated in the container, thereby improving throughput in the fluorescence measurement or light emission measurement.

The measuring kit according to the present invention comprises, for the sake of measurement of fluorescence or light emission originated from a measurement object disposed in a liquid in a container from the bottom of the container, a container for accommodating the measurement object together with the liquid, and one or more masking members each having above-mentioned structure that comprises a light shielding part and an outer frame part. Further, the light measuring kit according to the present invention may be equipped with, as a container, a microplate having one or more wells, each of which is to accommodate a measurement object, and in this case, the light measuring kit has one or more masking members each having a light shielding part and an outer frame part as mentioned above. Further, in the light measuring kit according to the present invention, as a container, when there is provided a microplate having a plurality of wells, each of which is to accommodate a measurement object, a masking member applied to the microplate may have such a structure having a plurality of light shielding parts and supporting structure supporting these light shielding parts. In this case, supporting structure in the masking member is composed of a sheet-shaped part covering upper plane of the microplate and a plurality of outer frame parts prepared corresponding to each of wells, and sheet-shaped part and these outer frame parts function as a positioning means for disposing each light shielding part to a predetermined location in corresponding well of the microplate.

In accordance with the above-mentioned composition, in the container or each of wells of the microplate prepared as the container, in case of fluorescence measurement, the masking member shields an exciting light irradiated via the bottom of the container for the liquid containing fluorescent dye or test compounds or the like located higher than the measurement object out of the whole liquids accommodated in the container, and therefore, materials above the measurement object are not excited. Thus, generation of background light is suppressed, thereby improving accuracy of detection of fluorescence specific to the measurement object. Even when a part of exciting light is passed through the masking member, and excessive fluorescent dye or test compound located higher than the measurement object is excited, a background light from the liquid containing fluorescent dye or the like located higher than the measurement object to the bottom of the container is shielded by the masking member, and separation between fluorescence originated from the measurement object and the background light becomes possible. Further, in case of light emission measurement, the masking member shields a background light from the liquid containing light emission reagent or the like located higher than the measurement object to the bottom of the container, separation between light emission originated from the measurement object and the background light becomes possible. In the meantime, the light shielding part in the masking member can allow transmission of liquids, and enables fluorescent dye and various compounds or the like in the liquid to react with the measurement object.

In this configuration, by simply using the light measuring kit, it becomes possible to perform high-sensitivity fluorescence measurements and high-sensitivity light emission measurements in a simple manner without giving influences to the measurement object. Various kinds of fluorescent dyes and measuring apparatuses or the like can be selected to be applied, and high-accuracy fluorescence measurements or high-sensitivity light emission measurements are made possible even at the time of dispensing of the reagent. Besides, there is no need for washing of fluorescent dyes and various reagents of the liquid accommodated in the container, thereby resulting in high-throughput fluorescence measurement or light emission measurement.

Note that, in the light measuring kit, when the masking member applied to the microplate comprises masking member having a plurality of light shielding parts and supporting structure supporting the same, various kinds of objects to be measured can be accommodated in a plurality of wells of the microplate, and by inserting each of corresponding light shielding parts of the masking member in a part of or the whole of well inside, background lights from inside the well can be shielded collectively, thereby ensuring various fluorescence measurements or light emission measurements efficiently.

In addition, the light measuring container according to the present invention is used to perform measurement of fluorescence or light emission of a measurement object through the bottom of the container, while the measurement object is accommodated inside together with the liquid. This light measuring container is used together with the masking member having light shielding effect and liquid permeability for shielding background light from the liquid located at higher portion of the measurement object toward the bottom. In particular, the light measuring container is provided with a positioning means for positioning a masking member to the inner wall thereof.

In accordance with this composition, the masking member is disposed by the positioning means at the predetermined position above the measurement object. In case of fluorescence measurement, the masking member thus disposed shields an exciting light irradiated via the bottom of the container, for the liquid containing fluorescent dye, test compound or the like located at higher than the measurement object, out of the whole liquid accommodated in the container, and therefore, materials above the measurement object are not excited. That is, generation of background light is suppressed, thereby improving detection accuracy of fluorescence specific to the measurement object. Even when a part of exciting light passes through the masking member and excessive fluorescent dye or test compound located higher than the measurement object is excited, a background light from the liquid containing fluorescent dye or the like located higher than the measurement object to the bottom of the container is shielded by the masking member, and separation between fluorescence originated from the measurement object and the background light becomes possible. Further, in case of light emission measurement, the masking member is able to shield a background light from the liquid containing light emission reagent or the like located higher than the measurement object to the bottom of the container, separation between light emission originated from the measurement object and background light becomes possible, and high-sensitivity light emission measurement becomes possible without influencing the measurement object. Various kinds of fluorescent dyes and measuring apparatuses or the like can be selected to be applied, and high-accuracy fluorescence measurements or high-sensitivity light emission measurements are possible even at the time of dispensing of the reagent. Besides, there is no need for washing of fluorescent dyes or the like contained in the liquid accommodated in the container, thereby resulting in high-throughput fluorescence measurement or light emission measurement. Besides, even when no means is provided to the masking member itself for positioning in the container, it is possible to dispose the light shielding part to a position where sufficient light shielding is achieved without making contact with the measurement object.

The light measuring container according to the present invention may be a microplate equipped with a plurality of wells, each of which accommodates liquid containing the measurement object. Also in this case, a means for positioning the masking member is provided to the inner wall of each well.

In the light measuring container of microplate type as mentioned above, a plurality of fluorescence measurements or light emission measurements become possible at one time while various kinds of objects to be measured are placed in a plurality of wells. Since a means for positioning the masking member is provided at the inner wall of each well, each corresponding masking member is inserted and shielding of a background light from the liquid accommodated in each of wells becomes possible. With these configurations, high-sensitivity fluorescence measurement or high-sensitivity light emission measurement is possible excluding effects of fluorescence from excessive fluorescent dye in the liquid, self-fluorescence of test compound or light emission from light emission reagent.

The present invention will be more fully understood from the detailed description given hereinbelow and the accompanying drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### Effect of the Invention

In the masking member, light measuring method, light measuring kit and light measuring container according to the present invention, high-sensitivity fluorescence measurement or high-sensitivity light emission measurement becomes possible, excluding influences of fluorescence from excessive fluorescent dye in the buffer being accommodated in the container together with the measurement object, self-fluorescence of test compound or light emission from light emission reagent, without giving bad effects to the measurement object such as cells. Besides, it is possible to cope with any measurement regardless of types of fluorescent dyes (fluorescence wavelength) and measuring system. In addition, even a case where reagent is dispensed after a masking member is mounted to the container, light shielding effect in the masking member is maintained uniform ensuring high-resolution detection of fluorescence or light emission originated from measurement object. Further, washing step after various reagents are added is unnecessary, thereby improving throughput in fluorescence or light emission measurements.

### Brief Description of the Drawings

Fig. 1 is a drawing showing the configuration of a first embodiment of a masking member according to the present invention;
Fig. 2 is a drawing showing the configuration of a first specific example of the light shielding part of the masking member according to the first embodiment shown in Fig. 1;
Fig. 3 is a drawing showing the configuration of a second specific example of the light shielding part of the masking member according to the first embodiment shown in Fig. 1;
Fig. 4 is a drawing showing the configuration of a third specific example of the light shielding part of the masking member according to the first embodiment shown in Fig. 1;
Fig. 5 is a longitudinal section view for explaining usage state of the masking member according to the first embodiment shown in Fig. 1;
Fig. 6 is a drawing for explaining the brief configuration and usage state of a second embodiment of a masking member according to the present invention;
Fig. 7 is a drawing for explaining a first example of a light measuring method according to the present invention;
Fig. 8 is a drawing for explaining a second example of a light measuring method according to the present invention;
Fig. 9 is a longitudinal section view showing the brief configurations of first to third embodiments of a light measuring kit according to the present invention;
Fig. 10 is a drawing for explaining a method of using the fluorescence measuring kit as a light measuring kit according to the third embodiment;
Fig. 11 is a drawing for explaining the brief configuration and usage state of a first embodiment of a light measuring container according to the present invention; and
Fig. 12 is a drawing for explaining the brief configuration and usage state of a second embodiment of a light measuring container according to the present invention.

### Description of the Reference Numerals

1a, 1b, 1c···light shielding part; 2, 2'···mesh; 3, 3'···mesh hole; 4···diagonal hole; 10, 20···outer frame part; 11···rim-shaped part; 21···sheet-shaped part; 100, 100', 200···masking member; 400···container; 500···microplate; 550, 750···well; 600, 700···light measuring container; 630, 730···positioning means; 800, 810, 820···light measuring kit; B···liquid (buffer) containing fluorescent dye, test compound or light emission reagent; S···measurement object; SS···sample solution; l···background light from buffer; L···fluorescence from measurement object.

### Best Modes for Carrying Out the Invention

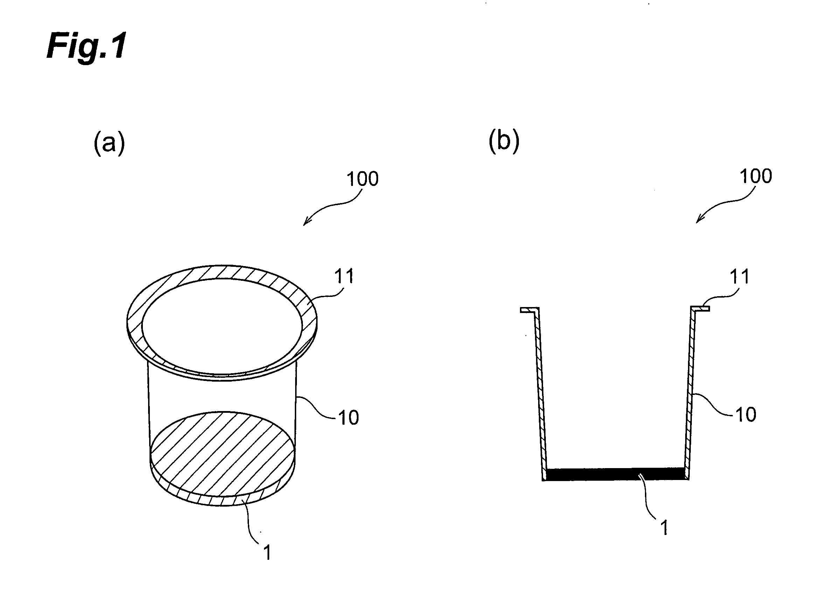

In the following, each of embodiments of a masking member, a light measuring method, a light measuring kit and a light measuring apparatus according to the present invention will be explained in detail using Figs. 1 to 12 taking fluorescence measurement as an example. In the explanation of drawings, the same reference symbol will be used for the same part and the same member to avoid duplication of explanations.

### (First example of masking member)

Fig. 1 is a drawing showing a structure of a first embodiment of a masking member according to the present invention, wherein the area (a) is a perspective view of the masking member according to the first embodiment, and the area (b) is a view of longitudinal section thereof.

As shown in Fig. 1, a masking member 100 according to the first embodiment comprises a light shielding part 1, and an outer frame part 10 for positioning the light shielding part 1 in the container while supporting the light shielding part 1. The outer frame part 10 has cylindrical shape so as to be fitted to container inner wall as shown in the area (a) of Fig. 1. The outer frame part 10 has a rim-shaped part 11, is engaged with upper part of the container at use, and functions so that the light shielding part 1 is set to a predetermined depth in the container. The outer frame part 10 has preferably hydrophobic nature and nonabsorbent nature from the viewpoint of suppression of nonspecific adsorption of proteins, reagents or the like at fluorescence measurement, and as for materials, polystyrene, polypropylene and polyethylene are preferred. The color of the masking member 100 is not particularly limited as long as it is not translucent, and black color is normally preferred for light shielding and optical quenching reasons. Alternatively, the light shielding part 1 is used as the reflection part and a color reflecting nonspecific fluorescence or light emission may be employed.

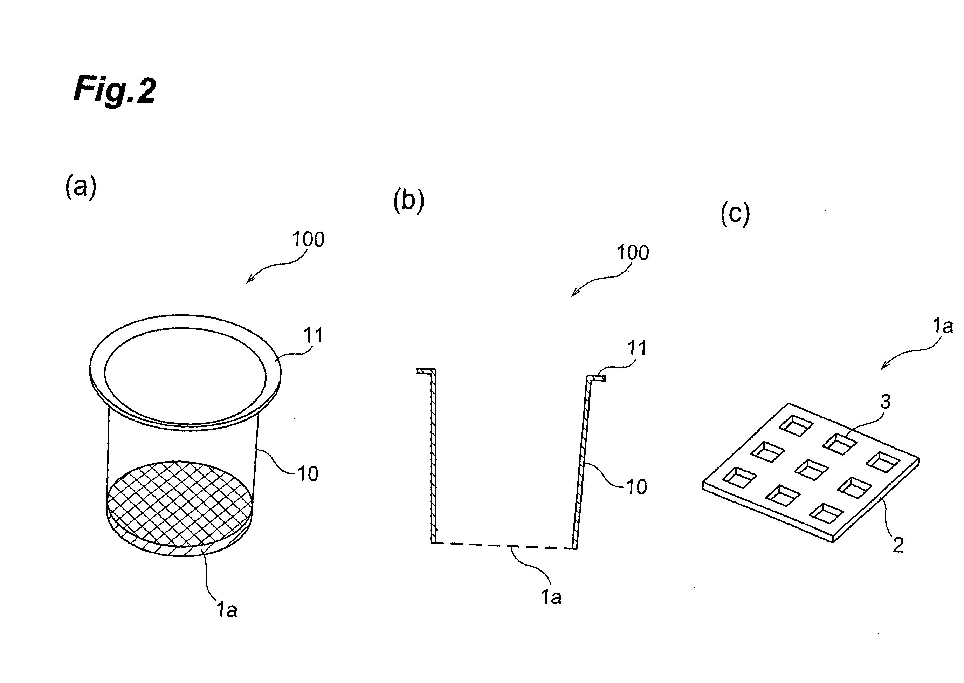

As shown in Fig. 1, the light shielding part 1 supported by the outer frame part 10 has a membrane form. The light shielding part 1 has light shielding effect and liquid permeability. Figs. 2 to 4 are drawings showing specific structures of the light shielding part.

Fig. 2 is a drawing showing the configuration of the first specific example of the light shielding part in the masking member according to the first embodiment shown in Fig. 1. The area (a) is a perspective view showing the masking member including a light shielding part of single-layer mesh structure, the area (b) is a view of longitudinal section of the masking member, and the area (c) is an enlarged illustration of the light shielding part according to the first specific example.

In the first specific example shown in Fig. 2, the masking member 100 comprises a light shielding part 1a of single-layer mesh structure. As shown in the areas (a) and (b) of Fig. 2, the light shielding part 1a has a net-like structure in mesh-form. As shown in the area (c) of Fig. 2, a mesh 2 constituting the light shielding part 1a has a plurality of fine mesh holes 3, and when fluorescent dye, test compound or the like are dispensed, these materials are passed through the mesh holes 3 and are transmitted to a measurement object. In the meantime, since mesh holes 3 are minute, majority of lights incident to the light shielding part 1a is not transmitted (light shielding).

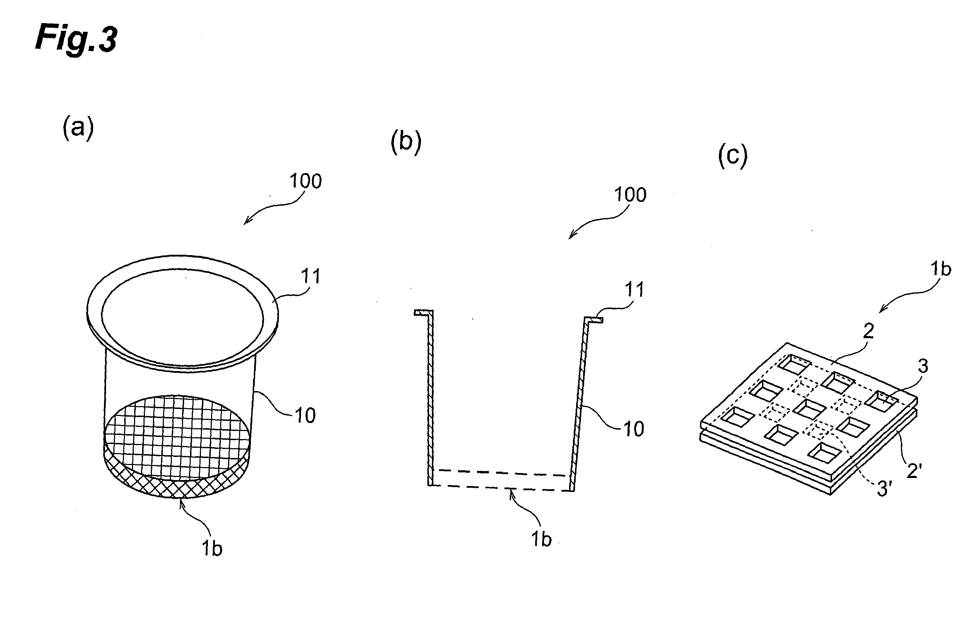

Fig. 3 is a drawing showing the configuration of a second specific example of the light shielding part in the masking member according to the first embodiment shown in Fig. 1, the area (a) is a perspective view showing the masking member including light shielding part of two-layer mesh structure, the area (b) is a view of longitudinal section of the masking member, and the area (c) is an enlarged illustration of the light shielding part according to the second specific example.

In the second specific example shown in Fig. 3, the masking member 100 comprises a light shielding part 1b of two-layer mesh structure. As shown in the area (a) of Fig. 3, the light shielding part 1b has a structure of lamination of two single layer meshes. As shown in the area (b) of Fig. 3, the two-layer mesh structure is disposed so that nets of two-layer mesh are staggered. Further, as shown in detail in the area (c) of Fig. 3, with the light shielding part 1b, mesh holes 3, 3' of meshes 2, 2' are overlapped in staggered fashion, and a direct light incident to the light shielding part 1b is hardly transmitted. Therefore, the light shielding part 1b according to the second specific example has, compared with single-layer mesh structure such as the first specific example shown in Fig. 2, higher light shielding effect. In the meantime, a liquid such as buffer or the like can permeate mesh holes 3, 3' of each of two-layer meshes 2, 2'.

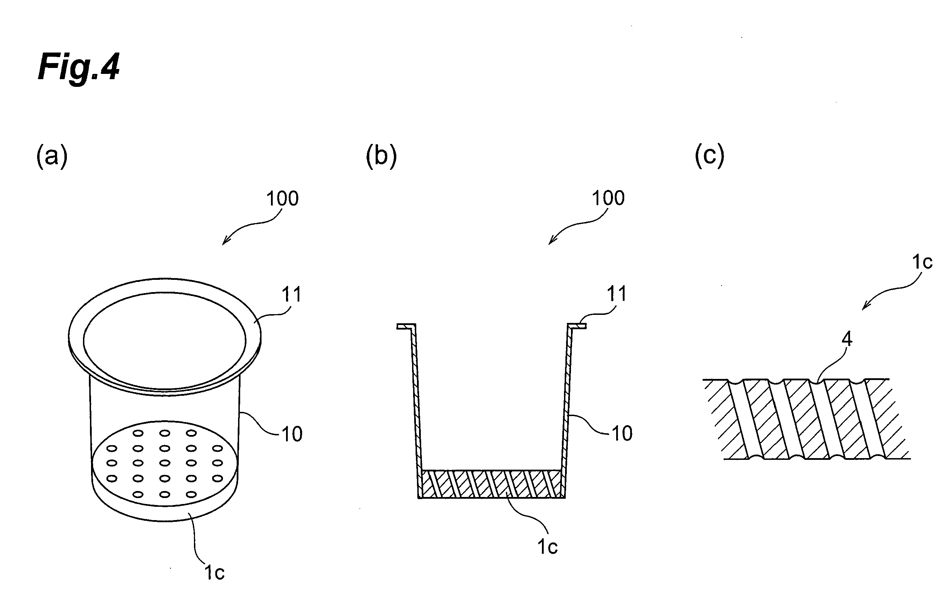

Fig. 4 is a drawing showing the configuration of a third specific example of the light shielding part in the masking member according to the first embodiment shown in Fig. 1. The area (a) is a perspective view showing the masking member including light shielding part of diagonal cylinder structure, the area (b) is a longitudinal section of the masking member, and the area (c) is an enlarged illustration of the light shielding part according to the third specific example.

In the third specific example shown in Fig. 4, the masking member 100 comprises a light shielding part 1c of diagonal cylinder structure. As shown in the area (a) of Fig. 4, a plurality of holes are provided in the light shielding part 1c penetrating front and rear thereof. However, as shown in the areas (b) and (c) of Fig. 4, these holes are not provided vertically in the light shielding part 1c, but are diagonal holes 4 provided with diagonal angle. Accordingly, a light incident to the light shielding part 1c can hardly permeate therethrough, but is shielded. In the meantime, a liquid such as buffer or the like can permeate diagonal holes 4 of the light shielding part 1c.

The light shielding part having the structure mentioned above has preferably hydrophobic nature and nonabsorbent nature same as the outer frame part. Specifically, as for materials, nylon, cellulose, cotton, wool or the like having higher hydrophilic nature are used for applications where a drug is dispensed after insertion of the masking member, or resin, glass, silicon member or the like subjected to hydrophilic processing by plasma processing, chemical processing, photocatalytic reaction or the like, are preferably used. In a case nonspecific adsorption of proteins or the like should be avoided, polyester, polystyrene, polypropylene, polyethylene, polycarbonate or the like are preferably used as the hydrophobic raw materials.

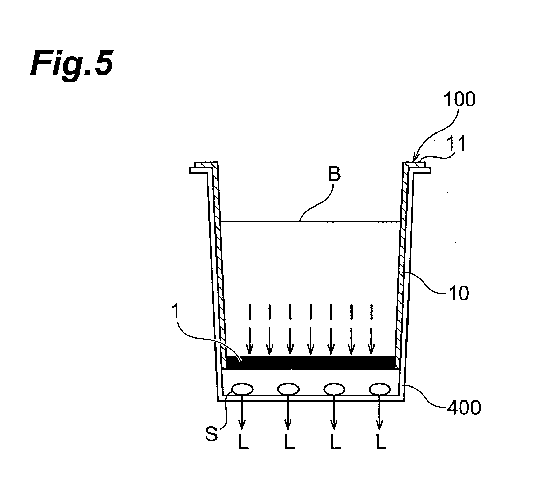

Next, referring to Fig. 5, functions of the masking member according to the first embodiment will be explained. Fig. 5 is a longitudinal section for explaining the usage state of the masking member according to the first embodiment. As shown in Fig. 5, object S to be measured such as incubated cells, coated antibody or the like is disposed on the bottom of a container 400 having transparent bottom. Liquid B containing fluorescent dye (buffer) is filled to the container 400, and the object S to be measured incorporating fluorescent dye (e.g., fluorescence labeled cell) emits a predetermined fluorescence. Further, a test compound (reagent) desired to be subjected to screening is also supplied to the buffer B. In the container 400, the masking member 100 according to the first embodiment is inserted. The rim-shaped part 11 of the outer frame part 10 of the masking member 100 engages with upper end of the container 400 and positions the light shielding part 1 to a predetermined position in the container 400. The light shielding part 1 is preferably positioned at a height not making contact with the object S to be measured from the viewpoint that the object S to be measured is not physically affected.

In this state, an exciting light is irradiated from the transparent bottom of the container 400 and fluorescence L from the object S to be measured is measured from the bottom of the container 400. In this case, the exciting light irradiated from the bottom of the container 400 is shielded by the light shielding part 1 and does not reach the buffer located higher than the light shielding part 1, and is radiated selectively to the object S to be measured located lower than the light shielding part 1. Meanwhile, even when a part of exciting light is passed through the light shielding part 1, and excessive fluorescent dye or test compound existing in the buffer B is excited, a background light 1 (nonspecific fluorescence) from the buffer B due to fluorescence originated therefrom is shielded by the light shielding part 1. Accordingly, in the fluorescence measurement from the bottom of the container 400, a specific fluorescence L from the measurement object can be measured without being disturbed by the background light 1 from the buffer, and high-accuracy fluorescence measurement with less pseudopositive becomes possible.

In addition, in this case, since fluorescence from excessive fluorescent dye and test compound not absorbed by the object S to be measured in the buffer B is shielded by the light shielding part 1, replacement step (washing step) of the buffer required by the conventional method is unnecessary. As a result, with the washing step as mentioned, labor hour for washing is saved and a problem that a measurement object is detached from container bottom is not caused, thereby improving throughput of fluorescence measurement. Besides, dispensing of reagent or the like is possible even when the masking member 100 is provided, while the reagent dispensed reaches object S to be measured via light shielding part 1 having liquid permeability. On this occasion, the reagent and object S to be measured cause a predetermined reaction and fluorescence observation on the result can be carried out in real time.

Although the object S to be measured shown in the example of use shown in Fig. 5 is fixed to the bottom of the container 400, the masking member according to the present invention is applicable to fluorescence measurement of cells or the like floating in the buffer B. If this is the case, it is preferable that the size of mesh holes of the light shielding part 1 be made finer and floating cells be held lower than the light shielding part 1.

In addition, although according to this example of use, the object S to be measured is caused to take in fluorescent dye to allow fluorescence labeling, if object S to be measured expresses fluorescent protein, for example, green fluorescent protein (GFP), cells may not necessarily be labeled by fluorescent dye. Even in this case, a background light originated from test compound having self-fluorescence can be shielded, and therefore, high-accuracy fluorescence measurement with less pseudo-positive becomes possible. Further, washing step is also unnecessary, thereby improving throughput of fluorescence measurement.

Although fluorescence labeled object S to be measured is used in this example of use, light emission measurement may be carried out using cells expressing gene of luminescent enzymes such as luciferases as a measurement object. In the light emission measurement, irradiation of an exciting light exciting fluorescent dye is unnecessary. In light emission measurement, since masking member can shield a background light from a liquid containing light emission reagent or the like located higher than the measurement object to the bottom of the container, separation between light emission originated from the measurement object and background light becomes possible, and high-accuracy and high-throughput light emission measurement becomes possible without giving influences to the measurement object.

### (Second embodiment of masking member)

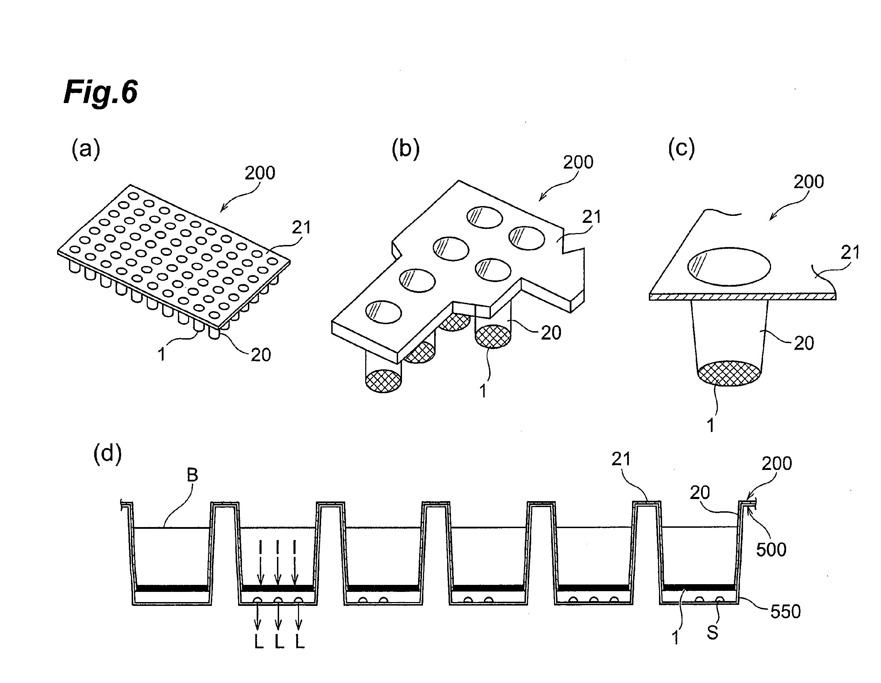

Fig. 6 is a drawing for explaining the brief configuration and usage state of a second embodiment of a masking member according to the present invention. The area (a) is a perspective view showing the entire masking member according to the second embodiment, the area (b) is an enlarged illustration of the masking member, the area (c) is an enlarged illustration of periphery of light shielding part, and the area (d) is a longitudinal section view showing the usage state of the masking member.

The masking member relating to the second example differs from the masking member (Fig. 1) according to the first embodiment, in that it is used for a microplate having a plurality of wells.

As shown in Fig. 6, a masking member 200 according to the second embodiment is used for a microplate that has a plurality of wells for accommodating objects to be measured, and the masking member 200 comprises a plurality of light shielding parts 1 corresponding to a plurality of wells of the microplate and supporting structure for supporting each of these light shielding parts 1. The supporting structure has a plurality of outer frame parts 20 of small cylindrical-shape and a sheet-shaped part 21 of integral structure for covering upper plane of the microplate, is engaged with upper plane profile of the microplate, and positions each of light shielding parts 1 into each of wells of the microplate.

As shown in the areas (b) and (c) of Fig. 6, for individual light shielding part 1 and the outer frame part 20 of small cylindrical-shape for supporting it, the structure and materials same as those of the masking member according to the above-mentioned first embodiment may be applicable. Note that, since they are used in simultaneous all well measurement system, it is preferable that for the sake of unification of light shielding and optical quenching conditions for all wells, structure of each of the light shielding parts 1 and positional relationship in each of the wells be made uniform.

In usage state of the masking member according to the second embodiment, as shown in the area (d) of Fig. 6, objects S to be measured such as incubated cells or the like are disposed on the transparent bottom of wells 550 provided in a microplate 500. A liquid B containing fluorescent dye (buffer) is supplied to each of the wells 550, and the object S to be measured in each of the wells incorporating the fluorescent dye emits a predetermined fluorescence. A test compound (reagent) desired to be subjected to screening in each well is also supplied to the buffer B. The masking member 200 according to the second embodiment is inserted into the microplate 500 so that each light shielding part 1 and the outer frame part 20 of small cylindrical-shape for supporting them is engaged. After the sheet-shaped part 21 of integral structure is fit so as to cover the upper part of the microplate 500, the light shielding part 1 is positioned at a predetermined position in the well 550.

In the masking member 200 according to the second embodiment, same as above-mentioned first embodiment, fluorescent L from the object S to be measured in each well is fluorescence measured from transparent bottom of the well 550. In this case, an exciting light being irradiated from the bottom of the well 550 is shielded by the light shielding part 1 and therefore does not reach a buffer located higher than the light shielding part 1, and is radiated selectively to the object S to be measured located lower than the light shielding part 1. Meanwhile, even when a part of exciting light is passed through the light shielding part 1, and excessive fluorescent dye or test compound existing in the buffer B is excited, a background light 1 from buffer B located higher than the light shielding part 1 is shielded by the light shielding part 1. Accordingly, in the fluorescence measurement from the bottom of each of the wells 550, high-accuracy fluorescence measurement becomes possible without being disturbed by the background light 1 from the buffer.

Even in this second embodiment, since fluorescence from excessive fluorescent dye in the buffer B is shielded by the light shielding part 1, replacement step of the buffer is unnecessary, thereby improving throughput of fluorescence measurement. Even a case where a desired reagent or the like is dispensed respectively to each well 550 while the masking member 200 is being provided, dispensed reagent reaches the object S to be measured via the light shielding part 1 having liquid permeability. Then, the reagent and object S to be measured cause a predetermined reaction and the result can be fluorescence observed from the bottom of each well 550. This allows various fluorescence measurements of all wells simultaneously.

Also in this embodiment, same as the first embodiment, when fluorescence measurement is performed using cells which express fluorescent protein, for example, green fluorescent protein (GFP) as the measurement object, a step of labeling cells with fluorescent dye may be eliminated. Further, same as the first embodiment, when light emission measurement is performed using cells which express gene of luminescent enzymes such as luciferases as the measurement object, similar effects will be developed.

### (First embodiment of light measuring method)

Next, the first embodiment of the light measuring method according to the present invention will be explained in detail taking a case where the masking member 200 according to the above-mentioned second embodiment is used as an example.

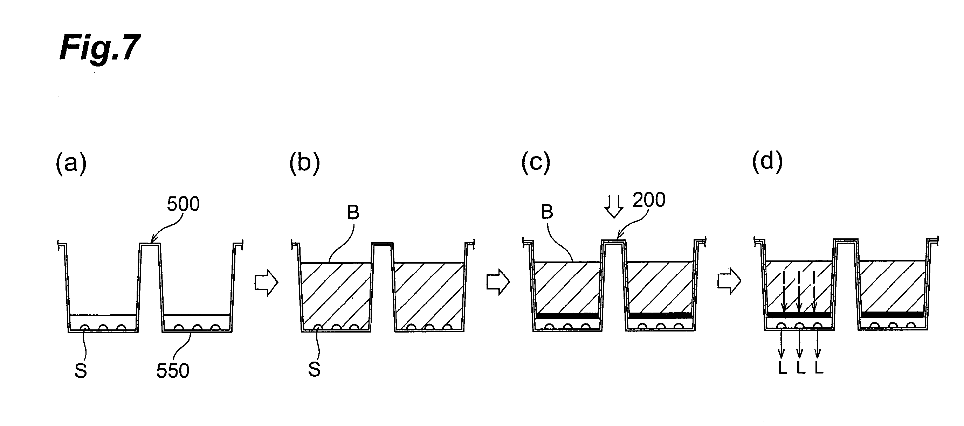

Fig. 7 is a drawing for explaining a first embodiment of a light measuring method according to the present invention using the masking member according to the second embodiment. In the light measuring method according to the first embodiment, as shown in the area (a) of Fig. 7, as a first step, incubated cells or coated antibodies or the like are placed at transparent bottom of each of wells 550 of a container like microplate 500 as the object S to be measured. Next, as shown in the area (b) of Fig. 7, as a second step, liquid (buffer) B containing fluorescent dye is filled in each of the wells 550 to allow taking in of fluorescent dye into incubated cells. Then, as shown in the area (c) of Fig. 7, as a third step, a light shielding part is disposed at upper part of the object S to be measured, while masking member 200 containing the light shielding part having light shielding effect and liquid permeability as mentioned above is being inserted and fit to the microplate 500, without removing buffer B containing fluorescent dye (without washing). With these configurations, fluorescence from other than the object S to be measured existing in the well 550 is shielded.

Thus, since fluorescence from excessive fluorescent dyes in the buffer B is shielded by the masking member 200, there is no need for time-consuming washing step of removing excessive fluorescent dyes in the buffer. Besides, such a problem that objects to be measured such as cells or the like are detached from the bottom of the well 550 due to washing does not occur. Therefore, high-throughput fluorescence measurement becomes possible.

Following this, as shown in the area (d) of Fig. 7, as a fourth step, fluorescence L from the object S to be measured is observed from the bottom of each of the wells 550, while background light from the buffer B is being shielded by the light shielding part 1. Although a compound, reagent or the like desired to be subjected to screening can be supplied to the object S to be measured before inserting the masking member 200, they can be supplied to the object S to be measured via the light shielding part 1 having liquid permeability even after the masking member 200 is inserted. In the fluorescence measuring method according to the first embodiment, since background light 1 from the buffer B is effectively shielded, high-accuracy fluorescence measurement becomes possible.

In addition, although in this embodiment, fluorescent dye is taken into object S to be measured for fluorescence labeling, labeling of cells by the fluorescent dye is unnecessary for the case where the object S to be measured expresses fluorescent protein, for example, green fluorescent protein (GFP). It is possible also in this case to shield a background light originated from a test compound having self-fluorescence, and therefore, high-accuracy fluorescence measurement with less pseudopositive becomes possible. Further, washing step becomes unnecessary, thereby improving fluorescence measurement throughput.

Further, although in this embodiment, fluorescence labeled object S to be measured is used, in the case where cells which express gene of luminescent enzymes such as luciferases are used as the measurement object, labeling of cells by the fluorescent dye is unnecessary. It is possible also in this case to shield a background light originated from a test compound having self-fluorescence, and therefore, high-accuracy and high-throughput light emission measurement becomes possible.

### (Second embodiment of light measuring method)

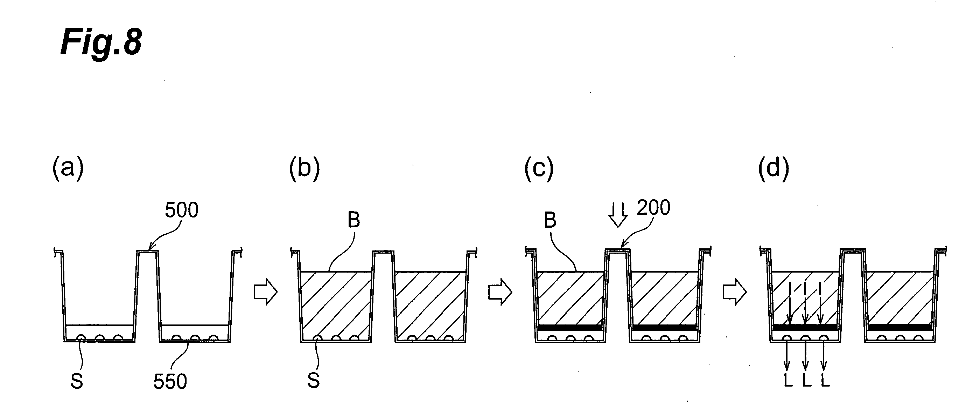

Fig. 8 is a drawing for explaining a second embodiment of a light measuring method according to the present invention using the masking member according to the second embodiment. In light measuring method according to the second embodiment, as shown in area (a) of Fig. 8, as a first step, object S to be measured is placed in each well 550 of the microplate 500 in a similar manner as the first embodiment. However, in the second example, as shown in the area (b) of Fig. 8, as a second step, the masking member 200 is firstly inserted and fit to the microplate 500, and is disposed at upper part of the object S to be measured. Then, as shown in the area (c) of Fig. 8, as a third step, liquid (buffer) B containing fluorescent dye is supplied to each of the wells 550 to cause the measurement object to take in fluorescent dye. After that, as shown in the area (d) of Fig. 8, as a fourth step, fluorescence L from the object S to be measured is observed from the bottom of each of the wells 550, while background light 1 from the buffer B is being shielded by the light shielding part 1, without removing the buffer B containing fluorescent dye (without washing). Reagent or the like desired to be subjected to screening can be supplied appropriately to the object S to be measured in a similar manner as fluorescence measuring method according to the first embodiment shown in Fig. 7.

As mentioned above, even with a method for inserting a masking member before supplying fluorescent dye to the measurement object (light measuring method according to the second embodiment), high-accuracy and high-throughput fluorescence measurement becomes possible by shielding a background light in the buffer, without performing a washing step of removing excessive fluorescent dye in the buffer.

Note that, also in this embodiment, same as the first embodiemnt, when fluorescence measurement is performed using cells which express fluorescent protein, for example, green fluorescent protein (GFP) as the measurement object, a step of labeling cells with fluorescent dye may be eliminated. Further, same as the first embodiment, when light emission measurement is performed using cells which express gene of luminescent enzymes such as luciferases as the measurement object, similar effects will be developed.

### (First to third embodiment of light measuring kit)

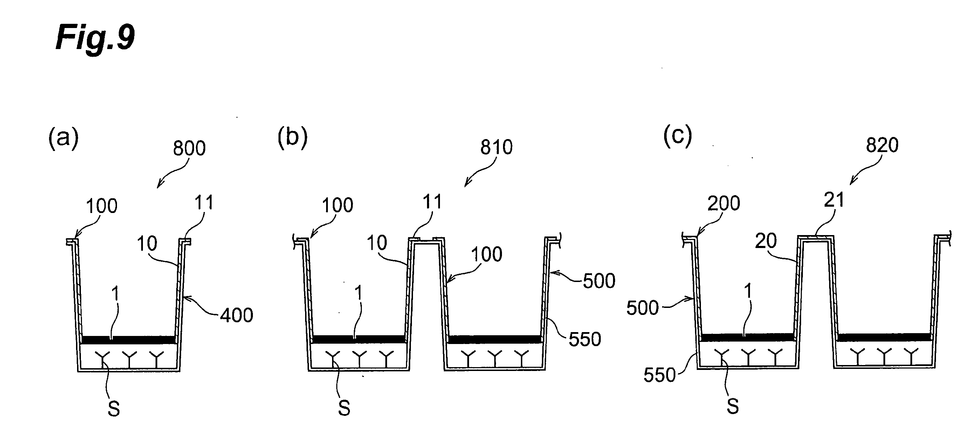

Fig. 9 is a longitudinal section view showing the brief configurations of first to third embodiments of a light measuring kit according to the present invention, the area (a) shows a fluorescence measuring kit as the light measuring kit according to the first embodiment, the area (b) shows a fluorescence measuring kit as the light measuring kit according to the second embodiment, and the area (c) shows a fluorescence measuring kit as the light measuring kit according to the third embodiment. In the light measuring kit according to the first to third embodiments, a measurement object is accommodated in advance in the container, the container and a masking member for performing light shielding form one set to allow high-accuracy fluorescence measurement conveniently.

As shown in the area (a) of Fig. 9, a fluorescence measuring kit 800 as the light measuring kit according to the first embodiment comprises, as one set, a petri dish or Bayer bottle type container 400 to which antibody is provided by way of coating as an object S to be measured in advance at the bottom thereof, and a masking member 100 to be inserted in the container 400 for shielding lights from other than the object S to be measured existing in the container 400. The masking member 100 has, same as the masking member according to the above-mentioned first embodiment, has light shielding part 1 and an outer frame part 10 for positioning the light shielding part 1 by supporting it in the container 400. The light shielding part 1 has light shielding effect and liquid permeability and has structures as shown in Figs. 2 to 4. The outer frame part 10 has a rim-shaped part 11 for positioning the light shielding part 1 in the container 400, while being engaged with upper part of the container 400. These components enable fluorescence measurement with ease, while buffer containing ligand (substances produced by antibodies and cells) labeled by fluorescent dye is charged into the container 400 with masking member 100 attached (fluorescence measurement with a state shown in Fig. 5 becomes possible).

As shown in the area (b) of Fig. 9, a fluorescence measurement kit 810 as the light measuring kit according to the second embodiment differs from the first embodiment (area (a) of Fig. 9) in that it comprises, as one set, a microplate 500 having a plurality of wells 550 to which an object S to be measured (antibody) is provided by way of coating as the container in advance, and one or more masking members 100. To each of the wells 550 of the microplate 500 is placed in advance an object S to be measured comprising antibodies or the like of the same type or different type to allow various measurements and examinations. The outer frame part 10 of individual masking member 100 includes the rim-shaped part 11 for positioning the light shielding 1 in the well 550 of the microplate 500. Each of these masking members 100 is inserted to a part of or whole of the well 550, and after a buffer containing ligands (substances produced by antibodies and cells) labeled by fluorescent dye is supplied in the well 550, various fluorescence measurements can be performed with ease at each of the wells 550.

As shown in the area (c) of Fig. 9, a fluorescence measuring kit 820 as the light measuring kit according to the third embodiment comprises a microplate 500 same as the second embodiemnt (area (b) of Fig. 9) as a container, and differs from the second embodiemnt (area (b) of Fig. 9) in that it comprises one masking member 200 of integral structure as shown in Fig. 6. The masking member 200 has a plurality of light shielding parts 1 corresponding to a plurality of wells 550 of the microplate 500. The sheet-shaped part 21 of the masking member 200 has, as shown in Fig. 6, sheet-shaped configuration to cover upper plane of the microplate 500 and functions to position each of the light shielding parts 1 within each well 550. In the third embodiment, an objects S to be measured such as various antibodies is provided in advance by way of coating, and a buffer containing ligands (substances produced by antibodies and cells) labeled by fluorescent dye is charged appropriately into each of the wells, while the masking member 200 is being inserted and fit. In this configuration, various screenings can be performed with ease in short period of time. In the third embodiment, insertion and fitting of the masking member 200 can be made collectively at one time for all wells 550, thereby promoting labor savings of jobs.

Note that, although in the above-mentioned first to third embodiments, embodiments in which ligands are fluorescence labeled are exemplified, the present invention is not limited thereto, and a fluorescence labeled second antibody that binds, for example, specifically to a ligand may be used. In this case, after a sample containing substances produced by antibodies and cells is added to in the well 550 where antibody S is fixed, the fluorescence labeled second antibody is added without involving a washing process. As it will be understood from the above, with light measuring kit (fluorescence measuring kit) according to the present invention, it is possible to remove, in various fluorescence immunoassay, background fluorescence from other than the sample adsorption plane thereby enabling improvement of detection sensitivity.

Further, although in the above-mentioned first to third embodiments, embodiments in which ligands are fluorescence labeled are exemplified, labeling may be made by luminescent enzymes such as peroxidase, alkali phosphatase or the like in lieu of fluorescence labeling. In this case, a substrate of luminescent enzymes (light emission reagents) such as luminol, hydrogen peroxide, luciferases or the like are added without involving a washing process. In this way, with light measuring kit (particularly fluorescence measuring kit) according to the present invention, it is possible to remove background light emission from other than the sample adsorption plane in various chemical and biological light emission immunoassay, thereby further enabling improvement of detection sensitivity.

Next, usage of the light measuring kit according to the present invention will be explained specifically taking a case of fluorescence measurement where fluorescence measuring kit is used as the light measuring kit according to above-mentioned third embodiment.

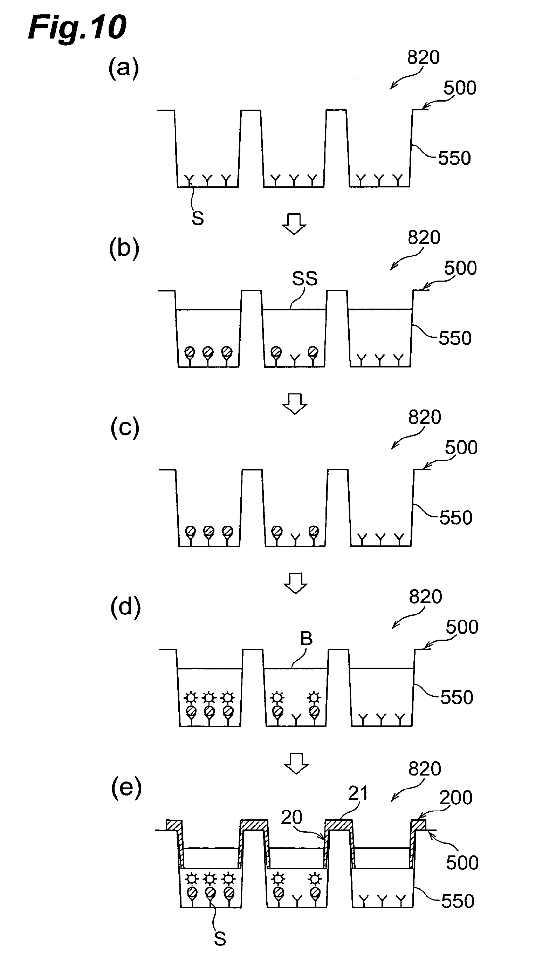

Fig. 10 is a drawing for explaining one example of use of the fluorescence measuring kit (area (c) of Fig. 9) according to the above-mentioned the third embodiment. In the fluorescence measuring kit 820, as shown in the area (a) of Fig. 10, antibodies are being provided by way of coating at the bottom of each well 550 of the microplate 500 as the object S to be measured. On the other hand, as shown in the area (b) of Fig. 10, a defined amount of sample solution SS containing ligands (substances produced by cells and antigen or the like) of antibody S is charged into each well 550, and an antigen-antibody reaction occurs between the antibody S and ligands. Then, as shown in the area (c) of Fig. 10, buffer B containing fluorescence labeled second antibody, which specifically binds to ligands, is added to the well 550 without involving a washing process for removing ligands, and an antigen-antibody reaction occurs between the ligands and the second antibody. At the end, as shown in the area (d) of Fig. 10, the masking member 200 is dropped into all of the wells 550 to cause fit, and fluorescence measurement is performed from the bottom of the well 550 without involving a washing process for removing the second antibody excessively fluorescence labeled in the buffer B. As mentioned above, use of single fluorescence measuring kit allows various fluorescence measurements with ease. The light measuring kit according to the present invention may be applicable, in addition to fluorescent assay using cells, as a tool for fluorescence immunoassay.

Note that the light measuring kit according to the present invention allows various fluorescence measurements, while, without attaching/detaching a masking member as illustrated in Fig. 10, buffer containing fluorescent dye or reagents are charged into each well with the masking member being engaged and mounted to the microplate, and fluorescence measurement is attempted from the bottom of the well without washing fluorescent dye of the buffer.

Note that although the above example of use exemplifies the case of fluorescence labeling of a second antibody, the present invention is not limited thereto, and for example, a ligand may be fluorescence labeled. When this is the case, a process for adding a second antibody becomes unnecessary. In accordance with fluorescence measurement using a fluorescence measuring kit as the light measuring kit according to the present invention, in various fluorescence immunoassay, it is possible to remove background fluorescence from other than sample adsorption plane, thereby further enabling improvement of detection sensitivity.

In addition, although the above example of use exemplifies the case of fluorescence labeling of a second antibody, labeling may be made by luminescent enzymes such as peroxidase, alkali phosphatase or the like in lieu of fluorescence labeling. In this case, a substrate of luminescent enzymes (light emission reagents) such as luminol, hydrogen peroxide, luciferases or the like are added without involving a washing process. As such, with light emission measurement using a light emission measuring kit as the light measuring kit according to the present invention, in various chemical and biological light emission immunoassay, it is possible to remove background light emission from other than sample adsorption plane, thereby further enabling improvement of detection sensitivity.

### (First embodiment of light measuring container)

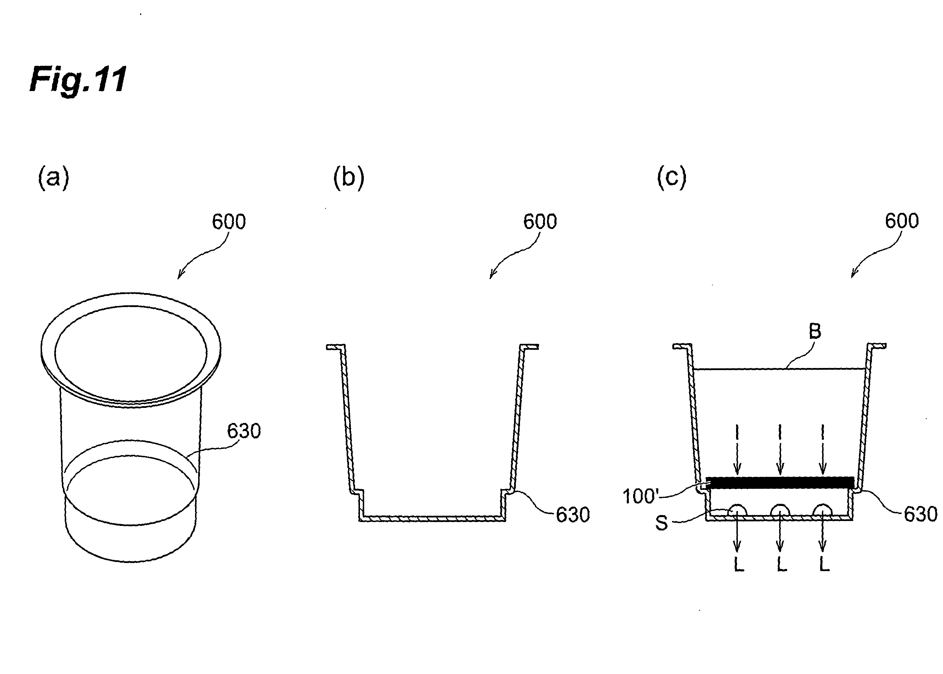

Fig. 11 is a drawing showing the configuration of a first embodiment of a light measuring container according to the present invention. The area (a) is a perspective view of the light measuring container according to the first embodiment, the area (b) is a longitudinal section view of the light measuring container according to the first embodiment, and the area (c) is a longitudinal section view showing the usage state of the light measuring container according to the first embodiment. In the first and second embodiments of the masking member, and in the first to third embodimnets of the light measuring kit mentioned above, a means for positioning the masking member is provided at masking member side, while with light measuring container according to the present invention, a positioning means is provided at the container side for accommodating objects to be measured.

The light measuring container according to the first embodiment is used while a masking member having light shielding effect and liquid permeability for shielding lights from other than objects to be measured existing in the container is being inserted in the container. As shown in the areas (a) and (b) of Fig. 11, a positioning means 630 for positioning the masking member is provided to an inner wall of the light measuring container 600. In this way, a step is provided to the inner wall of the container to allow positioning of the masking member, a positioning means is not limited thereto, and as an alternative, according to other aspects, concavity and convexity part may be provided to an inner wall of the container, or fixtures utilizing springs, screws, magnetic force or the like may be used for positioning.

As shown in the area (c) of Fig. 11, at fluorescence measurement, a masking member 100' having light shielding effect and liquid permeability is mounted to a positioning means 630 and is positioned in place at a predetermined position in the light measuring container 600. With this configuration, same as the case that a masking member according to the first embodiment is used, an exciting light irradiated from the bottom of the light measuring container 630 is shielded by a light shielding part 100', and does not reach a buffer located higher than the light shielding part 1, and is irradiated selectively to the object S to be measured located lower than the light shielding part 100'. In the meantime, even enabling improvement of case where a part of the exciting light is passed through the light shielding part 100', and fluorescent dye and test compound existing in the buffer B are excited, background light 1 from the buffer B is shielded by the light shielding part 100', and fluorescence light L from object S to be measured can be measured. With the measuring container according to the first embodiment, since the positioning means 630 is provided at light measuring container side, there is no need for positioning means at the masking member side as is the case of the masking member shown in Fig.1. Accordingly, it is possible to use membrane material or the like with mesh structure having light shielding effect and liquid permeability as it is as a masking member.

Note that, although fluorescence labeled object S to be measured is used in the first embodiment, light emission measurement may be carried out using cells expressing gene of luminescent enzymes such as luciferases as the measurement object. In light emission measurement, irradiation of an exciting light exciting fluorescent dye is unnecessary. In the case of light emission measurement, a masking member is capable of shielding a background light from a liquid containing light emission reagent or the like located higher than the measurement object to the bottom of a container, separation between light emission originated from the measurement object and background light becomes possible, thereby allowing high-accuracy and high-throughput light emission measurement without giving influences to the measurement object.

The light measuring container according to the first embodiment can be utilized, in addition to fluorescence assay using cells, as a tool for various light emission assay, fluorescence immunoassay, and chemical and biological light emission assay.

### (Second embodiment of light measuring container)

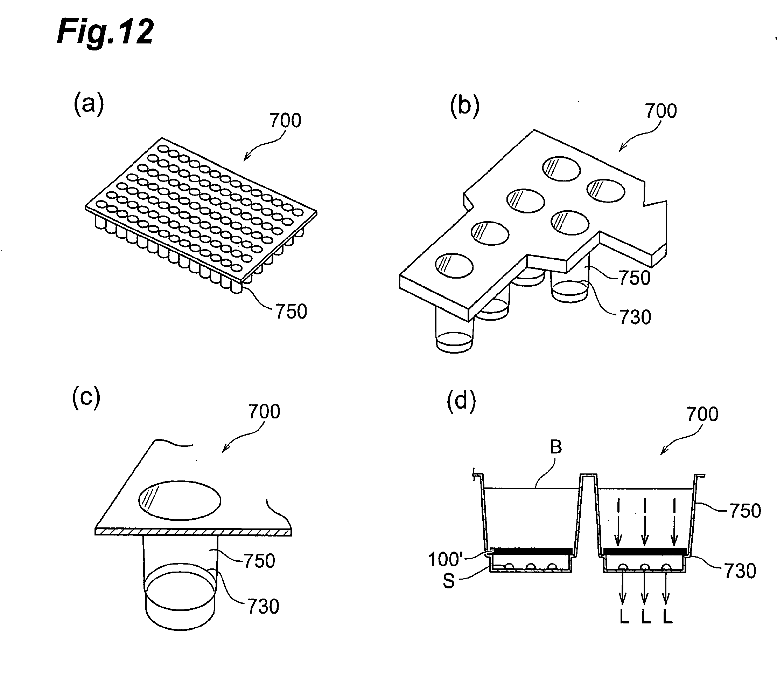

Fig. 12 is a drawing for explaining the cofiguration of a second embodiment of a light measuring container according to the present invention. The area (a) is a perspective view showing the whole light measuring container according to the second embodiment, the area (b) is an enlarged illustration of the light measuring container according to the second embodiment, the area (c) is an enlarged illustration in the vicinity of well, and the area (d) is a longitudinal section view showing the usage state of the light measuring container according to the second embodiment. The light measuring container according to the second embodiment is different from the light measuring container (Fig. 11) according to the first embodiment in that it is of microplate type one comprising a plurality of wells for accommodating objects to be measured.

As shown in the area (a) of Fig. 12, a light measuring container 700 according to the second embodiment includes a plurality of wells 750 for accommodating objects to be measured same as ordinary microplates. However, as it is understood from an enlarged illustration shown in the area (b) and enlarged illustration showing periphery of the well 750 shown in the area (c) of Fig. 12, the light measuring container 700 is provided with a positioning means 730 for positioning the masking member to inner wall of wells 750.

As shown in the area (d) of Fig. 12, at fluorescence measurement, the masking member 100' having light shielding effect and liquid permeability is put on the positioning means 730 at an inner wall of each of wells 750, and positioned in place at a predetermined position in each well. With this configuration, same as the case where the masking member according to the second embodiment (Fig. 6) is used, an exciting light irradiated from the bottom of the well 750 is shielded by the light shielding part 100', and does not reach a buffer located higher than the light shielding part 100', and is irradiated selectively to the object S to be measured located lower than the light shielding part 100'. In the meantime, even the case where a part of the exciting light is passed through the light shielding part 100', and fluorescent dye and test compound existing in the buffer B are excited, background light 1 from the buffer B is shielded by the light shielding part 100', and only fluorescence L of the object S to be measured can be measured. In the light measuring container according to the second embodiment, a positioning means is also provided at the container side, and there is no need for positioning means at masking member side such as shown in Fig. 6, it is possible to use membrane material or the like with mesh structure having light shielding effect and liquid permeability as it is as the masking member which is inserted in each of wells.

Note that, in this embodiment, although fluorescence labeled object S to be measured is used, light emission measurement may be carried out using cells expressing gene of luminescent enzymes such as luciferases as the measurement object. In light emission measurement, irradiation of an exciting light exciting fluorescent dye is unnecessary. At light emission measurement, since a masking member is capable of shielding a background light from a liquid containing light emission reagent located higher than the measurement object to the bottom of a container, separation between light emission originated from the measurement object and background light becomes possible, thereby allowing high-accuracy and high-throughput light emission measurement without giving influences to the measurement object.

The light measuring container according to the second embodiment can be utilized, in addition to fluorescence assay using cells, as a tool for various light emission assay, fluorescence immunoassay, and chemical and biological light emission assay.

The inventors, in order to verify effects of the masking member according to the present invention, carried out the following fluorescence measurements using the masking member shown in Fig. 6.

Two microplates with CHO cells adhered to the bottom of each of wells were prepared. Buffer containing fluorescent dye (Fluo 3) was supplied to CHO cells of the microplates to effect CHO cells to take-in fluorescent dye. On this occasion, removal of the buffer containing fluorescent dye was not performed and washing of the fluorescent dye was not performed. In addition, 1µM of FITC was added as an alternative of the test compound in each of the wells of both microplates.

Next, a masking member as shown in Fig. 6 corresponding to these microplates was prepared. Structure of each of light shielding parts is of single-layer mesh structure (made of nylon fiber) as shown in Fig. 2. For microplates to which is inserted this masking member and for microplates to which no masking member is inserted, fluorescence measurement was carried out from the bottom of wells.

As a result, with microplates to which is inserted the masking member, detection of fluorescence originated from cells was possible. On the other hand, for microplates to which no masking member is inserted, 1µM of FITC was too large fluorescence amount and hence camera range used for fluorescence measurement soon caused saturation, and detection of fluorescence originated from cells was not possible.

It is to be noted that it is evident that the masking member, the light measuring method, the light measuring kit and the light measuring container according to the present invention are not limited to above-mentioned examples, and the present invention may be modified in various ways. Such variations are not to be regarded as a departure from the spirit and scope of the invention, and all such modifications as would be obvious to one skilled in the art are intended for inclusion within the scope of the following claims.

### Industrial Applicability

The masking member, the light measuring method, the light measuring kit and the light measuring container according to the present invention are applicable to fluorescence measurement performed at screening of chemical library in drug discovery.

## Claims

1. A masking member used for measurement of one of fluorescence and light emission originated from a measurement object, which is placed in a liquid in a container, through a bottom of the container, said masking member comprising:
a light shielding part having liquid permeability, and also having light shielding effect for shielding a background light traveling from a liquid, which is located on the opposite side of the bottom of the container across the measurement object, toward the bottom of the container; and
an outer frame part for positioning said light shielding part on the opposite side of the bottom of the container across the measurement object, while supporting said light shielding part.

2. A masking member applied to a microplate having a plurality of wells in each of which is accommodated a liquid containing a measurement object, and being used for measurement of one of fluorescence and light emission, originated from the measurement object accommodated in each of the wells, through each bottom of the wells, said masking member comprising:
a plurality of light shielding parts, being prepared corresponding to each of the wells, each having liquid permeability, and having light shielding effect for shielding a background light traveling from the liquid, which is located on the opposite side of the bottom of the corresponding well across the measurement object accommodated in the corresponding well, toward the bottom of the corresponding well; and
a supporting structure including a sheet-shaped part covering an upper plane of the microplate, and a plurality of outer frame parts each being prepared corresponding to one of the wells for positioning the corresponding one of said light shielding parts on the opposite side of the bottom of the corresponding well across the measurement object accommodated in the corresponding well, while supporting the corresponding one of said light shielding parts.

3. A light measuring method comprising:
a first step of placing a measurement object in a container;
a second step of adding into said container a liquid containing at least one of fluorescent dye, test compound and light emission reagent;
a third step of shielding a background light traveling from a liquid, which is located on the opposite side of the bottom of said container across the measurement object, wherein a masking member having a light shielding part with light shielding effect and liquid permeability is prepared, and said masking member is arranged with respect to said container so that the measurement object is sandwiched between said light shielding part and the bottom of said container; and
a fourth step of measuring one of fluorescence and light emission, originated from the measurement object, through the bottom of said container.

4. A light measuring method comprising:
a first step of placing a measurement object into a container;
a second step of preparing a masking member including a light shielding part with light shielding effect and liquid permeability, and for arranging said masking member with respect to said container so that the measurement object is sandwiched between the bottom of said container and said light shielding part;
a third step of adding into said container a liquid containing at least one of fluorescent dye, test compound and light emission reagent; and
a fourth step of measuring one of fluorescence and light emission, originated from the measurement object, through the bottom of said container, while shielding a background light traveling from a liquid, which is located on the opposite side of the bottom of said container across the measurement object, toward the bottom said the container by said masking member.

5. A light measuring kit for measuring one of fluorescence and light emission, originated from a measurement object placed in a liquid in a container, through the bottom of said container, comprising:
a container for accommodating the measurement object together with the liquid; and
one or more masking members each having the same structure as that of a masking member according to claim 1.

6. A light measuring kit comprising:
a microplate having one or more wells each accommodating a measurement object; and
one or more masking members each having the same structure as that of a masking member according to claim 1.

7. A light measuring kit comprising:
a microplate having a plurality of wells each accommodating a measurement object; and
a masking member according to claim 2.

8. A light measuring container accommodating a measurement object together with a liquid therein and measuring one of fluorescence and light emission, originated from the measurement object, through the bottom thereof,
wherein a positioning means is provided on an inner wall of said container, for positioning a masking member with liquid permeability and also light shielding effect for shielding a background light traveling from a liquid, which is located on the opposite side of the bottom of said container across the measurement object, toward the bottom of said container.

9. A light measuring container comprising a plurality of wells each accommodating a liquid containing a measurement object, and being used for measuring one of fluorescence and light emission, originated from a measurement object accommodated in each of the wells, through each bottom of the wells respectively,
wherein a positioning means is provided on an inner wall of each of the wells, for positioning a masking member having liquid permeability and shielding a background light traveling from a liquid, which is located on the opposite side of the bottom of the corresponding well across the measurement object accommodated in the corresponding well, toward the bottom of the corresponding well.
